(19) Europäisches Patentamt
European Patent Office
Office européen des brevets

(11) Numéro de publication: **0 313 482**
**A1**

(12) # DEMANDE DE BREVET EUROPEEN

(21) Numéro de dépôt: **88420356.3**

(22) Date de dépôt: **18.10.88**

(51) Int. Cl.4: **C 08 L 83/04**
C 08 J 3/24, C 08 K 5/00,
C 08 K 3/00

(30) Priorité: **20.10.87 FR 8714750**

(43) Date de publication de la demande:
**26.04.89 Bulletin 89/17**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Peccoux, Pierre-Michel**
**71, Rue Henri Gorjus**
**F-69004 Lyon (FR)**

**Schorsch, Gilbert**
**9, Rue du Sellier**
**F-92700 Colombes (FR)**

(74) Mandataire: **Seugnet, Jean Louis et al**
**RHONE-POULENC INTERSERVICES Service Brevets Chimie Centre de Recherches des Carrières B.P. 62**
**F-69192 Saint-Fons Cédex (FR)**

(54) **Composition organopolysiloxane à fonction cetiminoxy comportant un hydrogel comme agent de durcissement.**

(57) La présente invention a pour objet une composition organopolysiloxane durcissant en élastomère même en atmosphère confinée portant des radicaux cetiminoxy liés à des atomes de silicium et renfermant un agent de durcissement ajouté avant emploi, choisi parmi un hydrogel d'origine naturelle ou synthétique.

Les compositions selon l'invention sont plus particulièrement utilisables à la fabrication de joints en atmosphère confinée.

EP 0 313 482 A1

Bundesdruckerei Berlin

## Description

## COMPOSITION ORGANOPOLYSILOXANE A FONCTION CETIMINOXY COMPORTANT UN HYDROGEL COMME AGENT DE DURCISSEMENT

La présente invention a pour objet une composition organopolysiloxane durcissant en élastomère même en atmosphère confinée portant des radicaux cetiminoxy liés à des atomes de silicium et renfermant un agent de durcissement ajouté avant emploi, choisi parmi un hydrogel d'origine naturelle ou synthétique.

Les compositions, du type ci-dessus à durcissement éventuellement accéléré, porteurs de radicaux acyloxy sont connues, elles sont décrites notamment dans le brevet britannique, GB-A-1 308 985 où l'agent de durcissement est une zéolithe contenant de l'eau et dans les brevets européens EP-A-118 325 EP-A-117 772 où l'agent de durcissement est respectivement choisi parmi un hydroxyde alcalin et alcalino-terreux ou bien par un mélange constitué par de l'eau et un phosphate et/ou un polyphosphate alcalin ou alcalino-terreux.

Ces compositions ne sont stables au stockage que si elles sont conservées séparément en 2 composantes (ou en 2 emballages). En effet, l'agent de durcissement, conditionné dans l'une des 2 composantes, contient de l'eau et peut libérer et/ou engendrer de l'eau lors du mélange des 2 composantes suivi généralement d'un chauffage.

Ces compositions présentent en outre une durée de réticulation (ou de durcissement) plutôt courte, de l'ordre de quelques minutes à 60 minutes. Cette réticulation est en outre indépendante du taux d'humidité de l'atmosphère environnante puisque l'eau peut être apportée exclusivement par l'agent de réticulation.

Ces compositions sont donc plus particulièrement utilisées dans des domaines d'application où cette propriété est particulièrement intéressante comme par exemple les fabrications de joints "in-situ" dans l'industrie automobile.

Les caractéristiques ci-dessus permettent de distinguer clairement ces compositions, des compositions monocomposantes à radicaux acyloxy ou cetiminoxy stables au stockage et durcissant au seul contact de l'humidité de l'air (voir par exemple FR-A 1 193 271 ; US-A 3 061 575 ; FR-A-2 429 811 ; EP-A-102 268 ; EP-A-157 580 et DE-A-3 524 452).

Pour les applications industrielles impliquant le dépôt en continu de joints, on utilise généralement un appareil automatique de dépose de composition diorganopolysiloxane bi-composante (à 2 composantes) possédant une tête mélangeuse équipée d'une buse de dépose, celle-ci se déplaçant selon le profil des joints à fabriquer.

Pour éviter les prises en masse de la composition dans la tête mélangeuse maintenue à température ambiante, lors de son fonctionnement ou lors des arrêts sur une chaîne continue de dépose de joints, il serait souhaitable de disposer d'une composition présentant d'une part une réticulation lente à température ambiante lente (supérieure à au moins une dizaine de minutes) après mélange des deux composantes c'est-à-dire après mélange de l'accélérateur de durcissement et, d'autre part, une réticulation très rapide du joint après sa dépose.

La maîtrise du temps de réticulation à température ambiante permettrait d'arrêter une ligne continue de dépose de joints sans qu'il soit nécessaire de purger la tête mélangeuse. Une prise assez lente à température ambiante serait également favorable à l'obtention d'une adhérence convenable du joint sur les substrats car la composition s'étalerait facilement sur ces substrats avec un temps de contact suffisamment long pour assurer un mouillage convenable de la surface, car l'adhérence des joints sur les substrats est souvent une propriété essentielle du joint.

Il est également souhaitable de disposer d'une composition dont la prise est rapide sous l'effet d'une élévation de température la plus basse possible. En effet, une élévation modérée de la température permettrait de maintenir des cadences élevées sur les chaînes industrielles de dépose en continu de joints.

Une telle composition devrait présenter en outre, au niveau de l'élastomère obtenu, de bonnes propriétés mécaniques en particulier à chaud et en atmosphère confinée sur le plan de la déformation rémanente à la compression (DRC).

Les compositions connues à durcissement éventuellement accéléré ne présentent pas l'ensemble des propriétés souhaitées citées ci-dessus. En effet les compositions dont l'agent de durcissement est à l'oxyde de zinc et de l'eau ou bien des zéolithes ne présentent pas notamment des propriétés mécaniques satisfaisantes à chaud en atmosphère confinée.

Les compositions décrites dans les brevets européens EP-A-118 325 et EP-A-117 772 ont permis de faire un progrès très important au niveau de la conservation des propriétés mécaniques à chaud en atmosphère confinée et ont donné la possibilité d'utiliser des compositions pour le collage ou le jointement de pièces circulant sur des chaînes industrielles de montage ou pour lesquelles il n'existe pas d'aires de stockage disponibles qui assureraient leur durcissement complet. Toutefois ces compositions peuvent présenter un temps de prise à température ambiante trop court et une adhérence sur substrat, en particulier métallique, qui peut être insuffisante.

La présente invention a précisément pour but de proposer une composition organopolysiloxane qui présente l'ensemble des propriétés souhaitées citées ci-dessus.

Elle concerne en effet une composition organopolysiloxane pouvant durcir en un élastomère même en absence d'humidité de l'air, en particulier en atmosphère confinée, caractérisée en ce qu'elle comporte :

A. - 100 parties de polymères principalement $\alpha$, $\omega$-di(hydroxy)-diorganopolysiloxane, de viscosité 700

à 1 000 000 mPa.s à 25 °C, constitués chacun d'une succession de motifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B. - 2 à 20 parties d'agents réticulants choisis parmi ceux de formule générale :

$R_pSiG_{4-p}$

dans laquelle le symbole R a la signification donnée sous(A), le symbole G identique ou différent est choisi parmi les groupes de formule :

$R_1R_2C = NO -$ ; 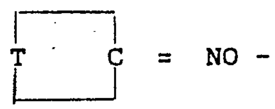

où les symboles $R_1$, $R_2$ identiques ou différents représentent des radicaux hydrocarbonés en $C_1$ - $C_8$, T représente un radical alkylène en $C_4$ - $C_8$ et le symbole p représente 0 ou 1.

C. - 0 à 150 parties de charges minérales.

D. - 0,01 à 10, de préférence 0,05 à 2 parties, pour 100 parties de A + B + C d'un hydrogel comportant une partie d'un colloïde coagulé d'origine naturelle ou synthétique et au moins cinq parties d'eau.

Dans ce qui suit ou ce qui précède, sauf mentions contraires, les parties et pourcentages indiqués sont en poids.

Selon la présente invention, le terme "hydrogel" désigne un gel qui contient de l'eau, ce gel provenant de la coagulation d'un colloïde avec inclusion d'eau. Le colloïde peut être d'origine naturelle ou synthétique.

Le colloïde coagulé de préférence insoluble dans l'eau forme un gel physique ou chimique et possède la propriété d'absorber des quantités importantes d'eau dans son réseau macromoléculaire. Cette propriété permet de n'introduire que de très faibles quantités de colloïde dans la composition organopolysiloxane.

Ces quantités très faibles n'ont pas d'influence ou une influence négligeable sur les propriétés finales de l'élastomère silicone obtenu après réticulation.

Ces hydrogels présentent par contre l'avantage de fournir un moyen efficace et aisé à mettre en oeuvre, pour disperser de façon homogène l'eau à l'intérieur de la composition.

Sont utilisables dans le cadre de la présente invention les hydrogels d'origine naturelle dont le réseau macromoléculaire est généralement des polysaccharides tels que l'agar-agar, la gelose, l'alginate, la carboxymethylcellulose telle que décrite en particulier dans le brevet US-A-3 589 364, l'hydroxyéthylcellulose, la méthylcellulose, le triacétate de cellulose gélifié tel que décrit notamment dans les brevets US-A-1 693 890 et US-A-3 846 404, l'amidon greffé polyacrylonitrile tel que décrit notamment dans les brevets US-A-3 935 099 et US-A-3 661 815, l'amidon greffé acide acrylique tel que décrit dans le brevet FR-A-2 305 452.

Sont également utilisables dans le cadre de la présente invention, les hydrogels d'origine synthétique dont le réseau macromoléculaire est formé de polymères de méthacrylate d'hydroxyéthyle ; alcool polyvinylique réticulé ; polyacrylamide ; acétate de polyvinyle partiellement hydrolysé, acrylate d'hydroxyethyle, mono-acrylate de diéthylène-glycol, monométhacrylate de diéthylène-glycol, acrylate de 2-hydroxypropyle, méthacrylate de 2-hydroxypropyle, acrylate de 3-hydroxypropyle, méthacrylate de 3-hydroxypropyle, monométhacrylate de dipropylène-glycol, vinylpyrrolidone, acrylamide, méthacrylamide, N-propylacrylamide, N-isopropylméthacrylamide, N-méthylacrylamide, N-2-hydroxyéthylméthacrylamide ; hydrogels de polyuréthanne formés de polymères légèrement réticulés de prépolymères terminés par un isocyanate qui sont les produits de réaction d'un poly(alkylèneoxy)polyol avec un diisocyanate organique légèrement réticulé avec de l'eau ou une polyamine organique, comme décrit dans le brevet US-A-3 939 105 ; copolymères de monomères à insaturation éthylénique d'acrylates et de méthacrylates hydroxyalkyliques et d'acrylates et méthacrylates d'alkoxyalkylène-glycols, comme décrit dans le brevet US-A-4 038 264 ; résines du type polyétherpolyuréthanne produites par réaction d'un diisocyanate organique avec un mélange d'au moins deux diols dont l'un est un polyalkylène-glycol hydrosoluble de poids moléculaire compris entre 3 000 et 30 000 et dont le second est un diphénol oxyalkylé portant 2 à 20 groupes oxyalkyléniques, ainsi que d'autres hydrogels connus de l'homme de l'art.

Sont particulièrement préférés dans le cadre de la présente invention les hydrogels dont le colloïde coagulé insoluble dans l'eau est porteur de groupes carboxylates en particulier acrylate et/ou méthacrylate d'un métal alcalin, en particulier de sodium pour 1 partie de colloïde et comportant au moins 20 parties de préférence au moins 50 parties d'eau.

Sont encore plus particulièrement préférés, dans le cadre de la présente invention, les polymères d'acrylate d'un métal alcalin (en particulier le sodium) obtenus par le procédé de polymérisation en suspension aqueuse d'acide acrylique et d'acrylate de métal alcalin tel que décrit notamment dans les brevets européens EP-A-36 463 et EP-A-83 222, cités comme référence.

Les polymères (A) de viscosité 700 à 1 000 000 mPa.s à 25° C, de préférence 1 000 à 700 000 mPa.s à 25 °C, sont des polymères essentiellement linéaires, constitués de motifs diorganosiloxy de formule précitée $R_2SiO$, et bloqués à chaque extrémité de leur chaîne par un groupe hydroxyle ; toutefois la présence de motifs

monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi :
- les radicaux alkyles et halogénoalkyles ayant de 1 à 8 atomes de carbone tels que les radicaux méthyle, éthyle, n-propyle, isopropyle, n-butyle, n-pentyle, n-hexyle, éthyl-2 hexyle, n-octyle, trifluoro-3,3,3 propyle, trifluoro-4,4,4 butyle, pentafluoro-4,4,4,3,3 butyle,
- les radicaux cycloalkyles et halogénocycloalkyles ayant de 4 à 8 atomes de carbone tels que les radicaux cyclopentyle, cyclohexyle, méthylcyclohexyl difluoro-2,3 cyclobutyle, difluoro-3,4 méthyl-5 cycloheptyle,
- les radicaux alcényles ayant de 2 à 4 atomes de carbone tels que les radicaux vinyle, alkyle, butène-2 yle,
- les radicaux aryles et halogénoaryles ayant de 6 à 8 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle.

A titre d'exemple de motifs représentés par la formule $R_2SiO$ on peut citer ceux de formules :

$(CH_3)_2SiO$

$CH_3(CH_2 = CH)SiO$

$CH_3(C_6H_5)SiO$

$(C_6H_5)_2SiO$

$CF_3CH_2CH_2(CH_3)SiO$

$NC-CH_2CH_2(CH_3)SiO$

$NC-CH(CH_3)CH_2(CH_2=CH)SiO$

$NC-CH_2CH_2CH_2(C_6H_5)SiO$

Il doit être compris, selon une variante de l'invention, que l'on peut utiliser comme polymère (A) des copolymères ou un mélange constitué de polymères α, ω-di(hydroxy)diorganopolysiloxanes qui diffèrent entre eux par le poids moléculaire et/ou la nature des groupements liés aux atomes de silicium.

Ces copolymères α, ω-di(hydroxy)diorganopolysiloxanes (A) sont commercialisés ; en outre, ils peuvent être aisément fabriqués.

Les agents réticulants (B) sont employés à raison de 2 à 20 parties de préférence de 3 à 15 parties, pour 100 parties des polymères α, ω-di(hydroxy)diorganopolysiloxanes (A).

Ils répondent à la formule précitée :

$R_pSiG_{4-p}$

dans laquelle, comme déjà indiqué, le symbole R a la signification donnée sous (A), et le symbole p représente zéro ou 1.

Des précisions ont été déjà fournies sur la nature des radicaux représentés par le symbole R.
- les symboles G identiques ou différents représentent des radicaux hydrolysables choisis parmi ceux de formules :

$R_1R_2C = NO-$ ,

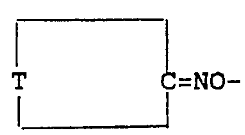

dans lesquelles les symboles $R_1$ et $R_2$, identiques ou différents représentent des radicaux hydrocarbonés en $C_1$-$C_8$, le symbole T représente un radical alkylène en $C_4$-$C_8$.

Les symboles $R_1$ et $R_2$ représentent des radicaux hydrocarbonés en $C_1$-$C_8$ englobent notamment :
- les radicaux alkyles en $C_1$-$C_8$ tels que les radicaux méthyle, éthyle, propyle, isopropyle, butyle, isobutyle, éthyl-2 hexyle, octyle,
- les radicaux cycloalkyles en $C_5$-$C_8$ tels que les radicaux cyclopentyle, cyclohexyle, méthylcyclohexyle,
- les radicaux aryles mononucléaires en $C_6$-$C_8$ tels que les radicaux phényle, tolyle, xylyle.

Le symbole T représente un radical alkylène en $C_4$-$C_8$ qui peut répondre aux formules : $-(CH_2)_4-$, $-(CH_2)_5-$, $-(CH_2)_6-$,

$-(CH_2)_7-$, $-CH_2-CH(C_2H_5)(CH_2)_3-$,

$-CH_2-CH_2-CH(CH_3)CH_2CH_2-$.

Comme exemple de silanes B on peut citer les silanes de formule :

$CH_3Si[ON=C(CH_3)_2]_3$ , $CH_3Si[ON=C(CH_3)C_2H_5]_3$ ,

$CH_2=CHSi[ON=C(CH_3)C_2H_5]_3$ , $C_6H_5Si[ON=C(CH_3)_2]_3$ ,

$CH_3Si[ON=C(C_2H_5)(CH_2)_3CH_3]_3$ ,

$CH_3Si[ON=C(CH_3)CH(C_2H_5)(CH_2)_3CH_3]_3$ ,

$(CH_3)_2C=NOSi[ON=C(CH_3)C_2H_5]_3$ ,

$CH_3Si[ON=C(CH_2)_4]_3$

$CH_3Si[ON=C(CH_2)_5]_3$

Il est clair que l'on peut remplacer dans les compositions de l'invention les constituants A et B par les produits dévolatilisés équivalents provenant de la réaction stoechimétrique de A sur B.

Les charges minérales (C) sont utilisées à raison de 0 à 150 parties, de préférence 10 à 120 parties, pour 100 parties des polymères $\alpha$, $\omega$-di(hydroxy)diorganopolysiloxanes (A). Ces charges peuvent se présenter sous la forme de produits très finement divisés dont le diamètre particulaire moyen est inférieur à 0,1 $\mu$m. Parmi ces charges figurent les silices de combustion et les silices de précipitation ; leur surface spécifique est généralement supérieure à 40m2/g, et se situe le plus souvent dans l'intervalle 150-200 m2/g.

Ces charges peuvent également se présenter sous la forme de produits plus grossièrement divisés, de diamètre particulaire moyen supérieur à 0,1 $\mu$m. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine, (hydratée ou non), le nitrure de bore, le lithopone, le métaborate de baryum ; leur surface spécifique est généralement inférieure à $30m^2/g$.

Des charges (C) peuvent avoir été modifiées en surface, par traitement avec les divers composés organosiliciques habituellement employés pour cet usage. Ainsi ces composés organosiliciques peuvent être des organochlorosilanes, des diorganocycloposyloxanes, des hexaorganodisiloxanes, des hexaorganodisilazanes ou des diorganocyclopolysilazanes (brevets français FR-A- 1 126 884, FR-A-1 136 885, FR-A-1 236 505, brevet anglais GB-A-1 024 234). Les charges traitées renferment, dans la plupart des cas, de 3 à 30 % de leur poids de composés organosiliciques.

Les charges (C) peuvent être constituées d'un mélange de plusieurs types de charges de granulométrie différente ; ainsi par exemple, elles peuvent être constituées de 30 à 70 % de silices finement divisées de surface spécifique supérieure à $40m^2/g$ et de 70 à 30 % de silices plus grossièrement divisées de surface spécifique inférieure à 30 $m^2/g$.

Les compositions organopolysiloxanes conformes à l'invention, peuvent comporter, en dehors des constituants A, B, C, D, des catalyseurs de durcissement habituellement choisis dans le groupe constitué par :
- des sels métalliques d'acides carboxyliques, de préférence des sels d'organoétains d'acides carboxyliques tels que le diacétate et le dilaurate de dibutylétain,
- des produits de réaction des sels d'organoétains d'acides carboxyliques avec les esters titaniques (brevet américain US-A-3 409 753),

- des chelates d'étain (brevet européen EP-A-147 323),
- des dérivés organiques du titane et du zirconium tels que les esters titaniques et zirconiques (brevet US-A-4 525 565).

Ces catalyseurs de durcissement sont utilisés habituellement à raison de 0,0004 à 6 parties, de préférence de 0,0008 à 5 parties pour 100 parties des polymères α, ω-di(hydroxy)diorganopolysiloxanes (A).

Les compositions organopolysiloxanes peuvent comporter également des adjuvants et additifs usuels, comprenant en particulier des stabilisants thermiques. Ces derniers produits, qui, par leur présence, améliorent la résistance thermique des élastomères silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Avantageusement les compositions selon l'invention contiennent de 0,1 à 15 parties, et de préférence de 0,15 à 12 parties, de stabilisants thermiques pour 100 parties de polymères α, ω-di(hydroxy)diorganopolysiloxanes (A).

Comme autres additifs peuvent être mentionnés des composés améliorant la résistance à la flamme ; ils sont choisis de préférence parmi les dérivés organiques et minéraux de platine.

Outre les constituants principaux A, B, C, D et les additifs précités, des composés organopolysiloxanes particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxanes sont bien connus ; ils comprennent plus spécialement :

(1f) - des polymères α, ω-bis(triorganosiloxy)diorganopolysiloxanes et/ou α-(hydroxy), ω-(triorganosiloxy)diorganopolysiloxanes, de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle, phényle, 60 % au moins de ces radicaux organiques étant des radicaux méthyle et 10 % au plus étant des radicaux vinyle.

La viscosité de ces polymères peut atteindre plusieurs dizaines de millions de mPa.s à 25°C ; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A 1 370 884. On utilise de préférence les huiles α, ω-bis(triméthylsiloxy)diméthylpolysiloxanes de viscosité allant de 10 mPa.s à 1 000 mPa.s à 25°C. Ces polymères qui jouent le rôle de plastifiants peuvent être introduits à raison d'au plus 150 parties, de préférence de 5 à 120 parties, pour 100 parties des polymères α, ω -di(hydroxy)diorganopolysiloxanes (A).

(2f) - des polymères méthylpolysiloxanes ramifiés, liquides, ayant de 1,4 à 1,9 radical méthyle par atome de silicium constitués d'une combinaison de motifs de formules :

$(CH_3)_3SiO_{0,5}$

$(CH_3)_2SiO$ et

$CH_3SiO_{1,5}$

Ils renferment de 0,1 à 8 % de groupes hydroxyles. Ils peuvent être obtenus par hydrolyse des chlorosilanes correspondants comme l'enseignent les brevets français FR-A-1 408 662 et FR-A-2 429 811. On utilise, de préférence, des polymères ramifiés dont les motifs sont répartis, selon les rapports suivants :

$(CH_3)SiO_{0,5}/(CH_3)_2SiO = 0,01$ à 0,15

et $CH_3SiO_{1,5}/(CH_3)_2SiO = 0,1$ à 1,5

Ces polymères peuvent être introduits à raison d'au plus 70 parties, de préférence de 3 à 50 parties, pour 100 parties des polymères α, ω-di(hydroxy)diorganopolysiloxanes (A). Ils apportent les propriétés de thixotropie notamment avec les silices traitées.

(3f) - des huiles diorganopolysiloxanes bloquées par des groupes hydroxyle et/ou alcoxy inférieurs ayant de 1 à 4 atomes de carbone, de faible viscosité en général comprise dans l'intervalle 2 mPa.s à 40 000 mPa.s à 25°C (si ces huiles sont bloquées uniquement par des groupes hydroxyles leur viscosité est inférieure à 700 mPa.s à 25°C ; les radicaux organiques liés aux atomes de silicium de ces huiles sont, comme précédemment, choisis parmi les radicaux méthyle, vinyle, phényle, 40 % au moins de ces radicaux étant des radicaux méthyle et 10 % au plus étant des radicaux vinyle.

Comme groupes alcoxy inférieurs bloqueurs de chaine peuvent être cités les groupes méthoxy, éthoxy, isopropoxy, n-propoxy, n-butoxy, isobutoxy, tertiobutoxy. Les taux en groupes hydroxyl et/ou alcoxy s'étalent généralement de 0,5 à 20 %. Ces huiles sont préparées selon des techniques usuelles décrites plus précisément dans les brevets français FR-A-938 292, FR-A-1 104 674, FR-A-1 116 196, FR-A-1 278 281, FR-A-1 276 619. De préférence, on utilise des huiles α, ω-dihydroxydiméthylpolysiloxanes de viscosité 10 à 300 mPa.s à 25°C, des huiles α,ω-dihydroxydiméthylphénylpolysiloxanes de viscosité 200 à 600 mPa.s à 25°C, et des huiles α, ω-diméthoxy(ou diéthoxy) diméthylpolysiloxanes de viscosité 30 à 2 000 mPa.s à 25°C. Elles peuvent être introduites à raison d'au plus 50 parties, de préférence de 2 à 40 parties, pour 100 parties des polymères α,ω-di(hydroxy)diorganopolysiloxanes (A). Ces huiles permettent de réduire la viscosité globale et

sont considérés selon l'expression usuelle comme des "process aids" ainsi que les huiles 2(f).

4(f) - des composés organosiliciques hydroxylés choisis parmi les composés répondant à la formule générale :

$Z'SiZ_2(OSiZ_2)_wOH$,

qui sont solides à la température ambiante. Dans cette formule les symboles Z, identiques ou différents, représentent des radicaux méthyle, éthyle, n-propyle, vinyle, phényle ; le symbole Z'représente un radical hydroxyle ou Z et le symbole w représente zéro, 1 ou 2.

A titre d'exemples concrets de ces composés peuvent être cités : le diphénylsilane diol, le méthylphénylsilanediol, le diméthylphénylsilanol, le tétraméthyl-1,1,3,3 disiloxanediol, le dimethyl 1,3 diphényl-1,3 disiloxanediol, le tétraméthyl-1,1,5,5 diphényl-3,3 trisiloxanediol. Ils peuvent être introduits à raison d'au plus 30 parties, de préférence 0,5 à 20 parties, pour 100 parties des polymères $\alpha,\omega$-di(hydroxy)diorganopolysiloxanes (A). Ils confèrent des propriétés thixotropantes au milieu qui en général se gélifie légèrement sous leur action.

Les polymères $\alpha$, $\omega$-bis(triorganosiloxy)diorganopolysiloxanes et/ou $\alpha$-(hydroxy) $\omega$-(triorganosiloxy))diorganopolysiloxanes décrits sous (1f) peuvent être remplacés, totalement ou partiellement, par des composés organiques inertes vis-à-vis des constituants A, B, C, D et miscibles au moins avec les polymères $\alpha$, $\omega$-di(hydroxy)diorganopolysiloxanes (A).

Comme exemples de plastifiants organiques on peut en particulier citer des coupes pétrolières de point d'ébullition supérieur à 200 °C, formées d'un mélange d'hydrocarbures aliphatiques et/ou aromatiques, des polybutylènes, de préférence de faible poids moléculaire, comme décrits dans les brevets français FR-A-2 2546 231, FR-A-2 293 831 et FR-A-2 405 985, les produits d'alkylation du benzène en particulier, les polyalkylbenzènes obtenus par alkylation du benzène par des oléfines à longue chaîne linéaire ou ramifiée, en particulier des oléfines à 12 atomes de carbone issues de la polymérisation du propylène, comme décrits par exemple dans le brevet français FR-A-2 446 849.

On peut également utiliser les polymères mixtes organiques polydiorganosiloxane tels que les copolymères à blocs polyoxyalkylènespolyorganosiloxanes, des esters phosphoriques (FR-A-2 372 203), du phosphate de trioctyle (FR-A-2 415 132), des esters dialcoliques d'acides dicarboxyliques (US-A-2 938 007) et des cycloalkylbenzènes (FR-A-2 392 476).

Les produits d'alkylation du benzène de poids moléculaire supérieur à 200, en particulier les alkylbenzènes et les polyalkylbenzènes sont les plastifiants organiques préférés.

Les compositions selon l'invention peuvent être éventuellement utilisées après dilution dans des composés organiques liquides, les diluants sont de préférence des produits usuels commercialisés choisis parmi :
- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,
- les cétones aliphatiques et cycloaliphatiques tels que la méthyléthylcétone, la méthylisobutylcétone, la cyclohexanone, l'isophorone,
- les esters tels que l'acétate d'éthyle, l'acétate de butyle, l'acétate d'éthylglycol.

La quantité de diluant demeure en général peu importante, elle est en général inférieure à 50 % en poids par rapport au poids total de la composition.

Conformément à l'invention on a pu mettre en évidence que l'on peut améliorer fortement l'adhérence de l'élastomère sur divers supports en particulier le bois et l'aluminium en ajoutant pour 100 parties de la somme des constituants A, B, C, de préférence de 0,1 à 10, de préférence de 1 à 5 parties d'au moins un agent d'adhérence E choisi notamment parmi les produits de formule :

$Y_nSi(OY')_{4-n}$

dans laquelle Y est un radical hydrocarboné saturé ou insaturé en $C_1$-$C_{10}$ et Y' représente un radical alkyle en $C_1$-$C_8$ et un radical alcoxyalkylène en $C_3$-$C_6$, n est 1 ou 0 et les polysilicates d'alkyle en $C_1$-$C_4$, en particulier le polysilicate de méthyle et le polysilicate d'éthyle.

Les mélanges de ces agents d'adhérence sont également utilisables en particulier le mélange de silicate de méthyle et de polysilicate de méthyle.

Les agents d'adhérence E préférés sont :

| | |
|---|---|
| $CH_2 = CHSi(OCH_3)_3$ | vinyltriméthoxysilane |
| $CH_2 = CHSi(OCH_2CH_2OCH_3)_3$ | vinyltris(méthoxyéthoxy)silane |
| $Si(OCH_3)_4$ | silicate de méthyle |
| $Si(OCH_2CH_2OCH_3)_4$ | tétra(méthoxyéthoxy)silane le polysilcate de méthyle et le polysilicate d'éthyle. |

Comme autre agent d'adhérence utilisable dans les compositions de l'invention, on peut également utiliser :
- les (Δ2-imidazolinyl) alkylsilanes et les diorganopolysiloxanes porteurs de motif (Δ2-imidazolinyl) alkylsiloxyle décrits dans les brevets français FR-A-1 360 395 , FR-A-1 387 337 et FR-A-1 467 679 et dont l'emploi comme agent d'adhérence est plus particulièrement décrit dans la demande de brevet français n° 86/12 892 déposée le 10 Septembre 1986.

Comme exemple typique, on peut citer le silane de formule :

$$(C_2H_5O)_3Si(CH_2)_3\ NCH_2CH_2N = CH$$

- les aminoalcoxysilanes, en particulier ceux dont chaque molécule contient au moins un groupe amino lié au silicium par au moins un atome de carbone, et au moins 2 groupes alcoxy ou polyalcoxy liés au silicium comme décrit dans le brevet français FR-A-2 074 144.

Des exemples typiques de cette famille sont ceux de formule :

$(C_2H_5O)_3Si(CH_2)_3NH_2$

$CH_3(C_2H_5O)_2Si(CH_2)_3NH_2$

$(CH_3O)_3Si(CH_2)_3NH(CH_2)_2NH_2$.

La préparation des compositions selon l'invention a lieu en deux étapes. Selon cette technique qui constitue un objet de la présente invention, on prépare une première composante par mélange à l'abri de l'humidité des constituants A, B, C, éventuellement E et éventuellement des additifs et adjuvants usuels.

Cette première composante est stable au stockage et durcit seulement par exposition à l'humidité de l'air ambiant.

Dans une deuxième étape, on ajoute (et homogénéisé) au moment de l'emploi, à ces compositions monocomposantes, les agents de durcissement D constituant la deuxième composante.

Selon un mode préféré de réalisation de l'invention, de façon à faciliter l'incorporation de l'agent de réticulation D, la deuxième composante contient l'hydrogel dispersé sous forme de petites particules au sein d'un empâtage. Cet empâtage est formé par homogénéisation à l'aide d'un malaxeur,d'une charge, éventuellement d'un diluant ou d'un plastifiant et d'hydrogel.

Le plastifiant peut être la totalité ou une partie du plastifiant (1f) à (4f) de la première composante et/ou une fraction (jusqu'à la moitié) de l'huile A. De même la charge peut être une fraction (quelques %) de la charge C.

Un autre objet de la présente invention est constitué par l'utilisation des compositions à durcissement rapide pour l'obtention de joints.

Les compositions conformes à l'invention peuvent être employées pour de multiples applications comme le jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in-situ" utilisés dans l'industrie automobile. Ces joints "in-situ" englobent plusieurs types, à savoir les joints "écrasés", les joints "en forme" et les joints "injectés".

Les joints "écrasés" sont formés à la suite de l'application d'un cordon pâteux des compositions sur la zone de contact entre 2 éléments métalliques à assembler. Le cordon pâteux est d'abord déposé sur l'un des éléments puis l'autre élément est aussitôt appliqué sur le premier ; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "en forme" sont également obtenus à la suite de l'application d'un cordon pâteux des compositions sur la zone de contact entre 2 éléments à assembler. Toutefois, après la dépose du cordon pâteux sur l'un des éléments on attend le durcissement complet du cordon en élastomère et à ce moment-là seulement applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux, épouse toutes les irrégularités des surfaces à jointoyer de ce fait, il est inutile (1) d'usiner soigneusement les surfaces métalliques devant être mises en contact les unes avec les autres et (2) de serrer avec force les assemblages obtenus ; ces particularités permettent de supprimer dans une certaine mesure, des joints de fixation, des entretoises, des nervures destinés habituellement à raidir et renforcer les éléments des assemblages.

Comme les compositions conformes à l'invention durcissent rapidement par chauffage en milieu confiné, ou à l'air ambiant il en résulte que les joints "en forme" (et aussi les autres joints "in-situ") découlant du durcissement de ces compositions peuvent être fabriqués dans des conditions de fabrication industrielle très contraignantes. Ils peuvent par exemple, être fabriqués sur les chaines de montage usuelles de l'industrie

automobile munies d'un appareil automatique de dépose des compositions. Cet appareil automatique possède bien souvent une tête mélangeuse équipée d'un système de chauffage et d'une buse de dépose, celle-ci se déplaçant selon le profil des joints à fabriquer. La tête mélangeuse peut recevoir la composition polysiloxanique monocomposante et l'accélérateur.

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boites à vitesses, d'entretoises de distribution et même de carters d'huile... Pour stopper la dépose de joint il suffit d'arrêter le chauffage de la tête mélangeuse et/ou l'arrivée de l'agent dopant puis on dispose d'au moins 10 minutes à température ambiante pour éventuellement purger la tête mélangeuse de la composition organopolysiloxane avant la prise en masse de cette dernière si l'arrêt de la chaîne est supérieur au temps de début de durcissement de la composition.

Les joints injectés sont formés en atmosphère confinée, dans des cavités souvent complètement closes ; les compositions placées dans ces cavités se transforment rapidement en élastomères dont les propriétés sont identiques à celles d'élastomères découlant du durcissement des compositions à l'air ambiant. Ces joints peuvent assurer par exemple l'étanchéité des paliers de vilebrequins.

Les compositions conformes à l'invention conviennent également pour la formation de joints à durcissement rapide dans d'autres domaines que l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques identiques à celles des élastomères issus des compositions monocomposantes connues donc formées par simple mélange des constituants A, B, C et éventuellement d'additifs usuels sans l'introduction de D. En particulier, les déformations rémanentes à la compression (DRC) sont relativement faibles, de l'ordre par exemple de 8 à 35 % ; en outre, la réticulation complète, après chauffage, mesurée par la dureté Shore A est obtenue dès la fin des temps de réticulation précédemment mentionnés lesquels s'étendent généralement de quelques minutes à 60 minutes, parfois plus mais jamais au-delà de 8 heures. Dans le cas des compositions monocomposantes, la réticulation complète demande dans les conditions les plus favorables, plusieurs jours.

L'invention est illustrée par les exemples ci-dessous.

- EXEMPLE COMPARATIF 1 ET EXEMPLES 2 A 5 :

On prépare une composition ($A_1$) durcissant dès la température ambiante en élastomère en présence d'humidité de l'air par mélange des constituants suivants :
- 250 parties : huile ($H_1$) (α, ω-dihydroxy)polydiméthylsiloxane de viscosité 20 000 mPa.s à 25 °C,
- 250 parties : huile ($H_2$) (α,ω-dihydroxy)polydiméthylsiloxane de viscosité 3 500 mPa.s à 25 °C,
- 25 parties : vinyl tris(méthyléthylcétiminoxy) silane,
- 40 parties : silice de combustion de surface spécifique BET 150 $m^2/g$.
- 0,21 partie de diacétate de dibutylétain.

Cette composition ($A_1$) est fluide et stable en milieu fermé anhydre.

On prépare d'autre part 5 empâtages ($B_1$ à $B_5$) renfermant chacun un système particulier de durcissement de la composition ($A_1$). La nature des constituants, ainsi que les parties en poids de ces empâtages ($B_1$ à $B_5$) figurent dans le tableau 1 ci-après :

TABLEAU 1

| CONSTITUANTS DE CHAQUE EMPATAGE | B1 | B2 | B3 | B4 | B5 |
|---|---|---|---|---|---|
| Huile H1 | 85,5 | 85,5 | 85,4 | 85,4 | 85,4 |
| Huile H3 | 7,25 | 7,25 | 7,25 | 7,25 | 7,25 |
| Silice A 200 | 2,75 | 2,75 | 2,75 | 2,75 | 2,75 |
| Aqua Keep 10 SHP | - | 0,06 | 0,18 | - | - |
| Gomme Xanthane | - | - | - | 0,18 | - |
| Carboxyméthylcellulose | - | - | - | - | 0,18 |
| Eau introduite | 4,5 | 4,5 | 4,5 | 4,5 | 4,5 |

Pour préparer les empâtages $B_1$ à $B_5$ on procède de la façon suivante :

Dans un mélangeur à turbine on introduit tout d'abord l'eau et l'hydrogel, sauf pour l'empâtage $B_1$. Le

mélange est maintenu sous forte agitation (200 tours/mn) jusqu'à l'obtention d'un gel homogène.

On ajoute ensuite dans le mélangeur à turbine les huiles $H_1$, $H_3$ et la silice. Les compositions $B_1$ à $B_5$ sont ensuite dévolatilisées 2 mn sous 1,33 KPa refroidies à 25 °C et conservées à l'abri de l'air.

Aqua Keep ® 10 SHP est un polymère acrylate de métal alcalin commercialisé par la Société NORSOLOR.

La gomme xanthane est du RHODOPOL 23, commercialisé par la Société RHONE-POULENC.

La carboxyméthylcellulose, sous la forme de son sel de sodium, est commercialisée par la Société PROLABO.

L'huile plastifiante $H_3$ est un (α, ω-bistriméthylsiloxy)polydiméthylsiloxane de viscosité 1 000 mPa.s à 25°C.

La silice A 200 est une silice de combustion de surface spécifique BET de 200 $m^2/g$.

On ajoute 7 parties des empâtages $B_1$ à $B_5$ à 100 parties de la composition $A_1$, et l'on obtient ainsi les compositions des exemples 1 à 5, on les place dans des tubes fermés et on les dispose dans des enceintes thermostatées à différentes températures T. On mesure le temps au bout duquel la composition ne peut plus être extrudée du tube.

Les résultats sont rassemblés dans le tableau 2 ci-après :

TABLEAU 2

| T | t (en mn) | | | | | |
|---|---|---|---|---|---|---|
| | Exemples | 1 | 2 | 3 | 4 | 5 |
| 22 °C | | 75 | 55 | 65 | 70 | 70 |
| 30 °C | | 40 | 30 | 40 | 45 | 40 |
| 40 °C | | 25 | 15 | 20 | 20 | 20 |
| 50 °C | | 15 | 8 | 10 | 10 | 10 |

Du tableau 2, il apparaît que, par rapport à la composition témoin de l'exemple 1, pour une même quantité d'eau introduite, les compositions durcissent plus rapidement quand l'eau est introduite au moyen d'un hydrogel.

- EXEMPLES 6 A 8 :

On prépare une composition $A_2$ par homogénéisation dans un mélangeur à l'abri de l'humidité de l'air de :

- 100 parties d'huile $H_1$,
- 4,575 parties d'un mélange équimolaire de vinyl tris(méthyléthylcétiminoxy)silane et de méthyl tris(méthyléthylcétiminoxy)silane.

Le mélange est soumis à très forte agitation puis on introduit :

- 6 parties de silice de combustion de surface spécifique BET de 300 $m^2/g$,
- 0,043 g de diacétate de dibutylétain.

Les compositions sont dévolatilisées 2 mn sous 1,33 KPa, refroidies à 20 °C et conservées à l'abri de l'air.

On prépare par ailleurs 3 empâtages $B_6$, $B_7$, $B_8$ suivant le même mode opératoire que pous les empâtages $B_1$ à $B_5$ des exemples 1 à 5. La nature des constituants de ces 3 empâtages ainsi que leur teneur (en parties en poids) sont indiquées dans le tableau 3 ci-après.

TABLEAU 3

| CONSTITUANTS DE CHAQUE EMPATAGE | B6 | B7 | B8 |
|---|---|---|---|
| Huile H1 | - | 100 | - |
| Huile H4 | 100 | - | 100 |
| Huile H3 | 8,5 | 8,5 | 8,5 |
| Silice A 200 | 3,0 | 3,0 | 3,00 |
| Aqua Keep 10 SH | 0,07 | - | - |
| Aqua Keep 10 SHP | - | 0,07 | - |
| Aqua Keep X5 | - | - | 0,07 |
| H2O | 5,2 | 5,2 | 5,2 |

L'huile $H_4$ est une huile du même type que l'huile $H_1$ mais de viscosité de 14 000 mPa.s à 25 °C.

La silice A 200 est une silice de combustion de surface spécifique BET 200 $m^2/g$.

Aqua Keep ® 10 SH, 10 SHP, X5 sont des polymères acrylate de métal alcalin commercialisé par la Société NORSOLOR.

On introduit dans un récipient cylindrique en matière plastique de 500 $cm^3$, 100 g de composition $A_2$ et 6,3 g de l'un des empâtages ($B_6$ à $B_8$) et l'on obtient ainsi les compositions des exemples 6 à 8. On malaxe aussitôt le contenu du récipient à l'aide d'une spatule et on poursuit ce malaxage pendant environ 1 mn 15 s.

On verse une première fraction des compositions dans des tubes cylindriques de 125 $cm^3$ et on évalue le temps (tg en mn) au bout duquel la composition gélifie ("pot-life") et ne peut plus être travaillée. On évalue ensuite sur les mêmes éprouvettes le temps (td en h et mn) au bout duquel les compositions peuvent être démoulées des tubes.

On verse une deuxième fraction selon une couche de 2 mm d'épaisseur sur une plaque préalablement enduite d'un détergent commercial et on mesure la dureté Shore A au bout de 6 heures ($DSA_6$) et 24 heures ($DSA_{24}$).

Toutes les opérations ci-dessus sont effectuées sous azote.

Les résultats obtenus sont rassemblés dans le tableau 4 ci-après :

TABLEAU 4

| Exemples | tg (mn) | td (h, mn) | DSA6 | DSA24 |
|---|---|---|---|---|
| 6 | 30 | 2 h 30 | 15 | 24 |
| 7 | 25 | 2 h | 14 | 24 |
| 8 | 45 | 3 h 30 | 11 | 24 |

- EXEMPLES 9 A 12 :

La composition de l'exemple 9 est la même que celle de l'exemple 6 et est préparée de la même façon. Les compositions des exemples 10 à 12 sont les mêmes que celles de l'exemple 9 sauf que l'on ajoute à la partie $A_2$ pour 100 parties d'huile $H_1$ :

Exemple 10 :

- 1,1 partie du silane de formule :

$(CH_3O)_3Si(CH_2)_3NH(CH_2)_2NH_2$

Exemple 11 :

- 1,1 partie du silane de formule :

$(CH_3CH_2O)_3Si(CH_2)_3NH_2$

Exemple 12 :

- 1,37 partie du silane de formule :

$$(CH_3CH_2O)_3Si(CH_2)_3NCH_2CH_2N = CH$$

Une fraction des différentes compositions sont utilisées pour confectionner des éprouvettes conformes à la norme ASA-116-1960.

On place face à face à 12 mm l'une de l'autre deux plaques carrées de 50 mm de côté, constituées du matériau envers lequel on désire mesurer l'adhérence de la composition durcie en élastomère. On bouche ensuite totalement avec des cales de bois l'espace ménagé entre les deux plaques sauf la partie médiane de cet espace de façon à délimiter une cavité, de dimensions 50 x 12 x 12 mm, s'étendant d'un bord à l'autre des plaques. On remplit cette cavité avec la composition, abandonne l'ensemble 28 jours à la température ambiante et enlève les cales pour libérer l'éprouvette. Celle-ci comporte donc deux plaques du même matériau liées l'une à l'autre, selon une de leurs médianes par un barreau parallélépipédique en élastomère.

Les éprouvettes ainsi fabriquées sont réparties en quatre lots d'égale importance, les éprouvettes constituant chaque lot se déffèrenciant entre elles par la nature du matériau des plaques, à savoir le verre, l'aluminium et le polychlorure de vinyle (PVC).

On mesure la résistance à la rupture (R/R) en MPa et l'allongement à la rupture (A/R) en % en suivant les recommandations de la norme ASA-116-1960.

Les ruptures obtenues sont nommées cohésives (COH) si elles ont lieu dans la masse du barreau d'élastomère. Elles sont nommées adhésives (ADH) si la rupture se fait par décollement du barreau au niveau de ses zones de contact avec les plaques.

Les résultats obtenus sont rassemblés dans le tableau 5 ci-après.

Une autre fraction des compositions sont également utilisées pour mesurer les temps tg et td selon le mode opératoire des exemples 5 à 8.

TABLEAU 5

| Exemple | tg mn | td h et mn | Verre | | Aluminium | | PVC | |
|---|---|---|---|---|---|---|---|---|
| | | | R/R MPa | A/R % | R/R MPa | A/R % | R/R MPa | A/R % |
| 9 | 30 | 2 h | 0,25 | 74 | 0,22 | 67 | 0,12 | 41 |
| | | | COH/ADH | | ADH | | ADH | |
| 10 | 12 | 1 h 20 | 0,24 | 73 | 0,24 | 72 | 0,16 | 45 |
| | | | ADH | | COH/ADH | | ADH | |
| 11 | 12 | 1 h 20 | 0,26 | 85 | 0,22 | 74 | 0,21 | 51 |
| | | | COH | | COH | | ADH | |
| 12 | 20 | 1 h 30 | 0,27 | 101 | 0,28 | 107 | 0,29 | 85 |
| | | | COH | | COH | | COH/ADH | |

Du tableau 5, il apparaît que la composition de l'exemple 12 présente la meilleure adhérence tout en présentant des tg et td tout à fait acceptables.

Il est à noter que les compositions des exemples 10, 11 et 12 contiennent des quantités sensiblement équimolaires de silane utilisé en tant qu'agent d'adhérence.

**Revendications**

1. - Composition organopolysiloxane pouvant durcir en un élastomère même en absence d'humidité de l'air, en particulier en atmosphère confinée, caractérisée en ce qu'elle comporte en poids :

A. - 100 parties de polymères principalement a, s-di(hydroxy)diorganopolysiloxane, de viscosité 700 à 1 000 000 mPa.s à 25 °C, constitués chacun d'une succession de motifs diorganosiloxy de formule $R_2SiO$ dans laquelle les symboles R, identiques ou différents, représentent des radicaux

hydrocarbonés ayant de 1 à 8 atomes de carbone, substitués ou non par des atomes d'halogènes, de groupes cyano.

B. - 2 à 20 parties d'agents réticulants choisis parmi ceux de formule générale :

$RpSiG_{4-p}$

dans laquelle le symbole R a la signification donnée sous(A), le symbole G identique ou différent est choisi parmi les groupes de formule :

$R_1R_2C = NO -$ ;

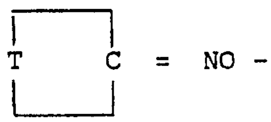

où les symboles $R_1$, $R_2$ identiques ou différents représentent des radicaux hydrocarbonés en $C_1$ - $C_8$, T représente un radical alkylène en $C_4$ - $C_8$ et le symbole p représente 0 ou 1.

C. - 0 à 150 parties de charges minérales.

D. - 0,01 à 10 parties, pour 100 parties de A + B + C d'un hydrogel comportant une partie d'un colloïde coagulé d'origine naturelle ou synthétique et au moins cinq parties d'eau.

2. - Composition selon la revendication 1, caractérisée en ce que l'hydrogel comporte un colloïde porteur de groupe acrylate et/ou methacrylate d'un métal alcalin et au moins 20, de préférence au moins 50 parties d'eau pour 1 partie de colloïde.

3. - Composition selon la revendication 1 ou 2, caractérisée en ce que le colloïde est un polymère d'acrylate d'un métal alcalin obtenu par le procédé de polymérisation en suspension aqueuse d'acide acrylique et d'acrylate de métal alcalin.

4. - Composition selon l'une quelconque des revendications précédentes dans laquelle les radicaux R portés par les atomes de silicium du diorganopolysiloxane A sont choisis parmi :
- les radicaux alkyles et halogénoalkyles ayant de 1 à 8 atomes de carbone,
- les radicaux cycloalkyles et halogénocycloalkyles ayant de 4 à 8 atomes de carbone,
- les radicaux alcényles ayant de 2 à 4 atomes de carbone,
- les radicaux aryles et halogénoaryles ayant de 6 à 8 atomes de carbone,
- les radicaux cyanoalkyles dont les chaînons alkyles ont de 2 à 3 atomes de carbone.

5. - Composition selon l'une quelconque des revendications précédentes, caractérisée en ce que les constituants A et B sont remplacés par les produits dévolatilisés provenant de la réaction stoechiométrique de A sur B.

6. - Composition selon l'une quelconque des revendications précédentes, caractérisée en ce qu'elle contient en outre un catalyseur de durcissement.

7. - Composition selon l'une quelconque des revendications précédentes, caractérisée en ce qu'elle contient en outre pour 100 parties de la somme des constituants A, B, C de 0,1 à 10 parties en poids d'au moins un agent d'adhérence E choisi parmi :
- les produits de formule :

$Y_nSi(OY')_{4-n}$

dans laquelle Y est un radical hydrocarboné saturé ou insaturé en $C_1$-$C_{10}$ et Y' représente un radical alkyle en $C_1$-$C_8$ et un radical alcoxyalkylène en $C_3$-$C_6$, n est 1 ou 0 et les polysilicates d'alkyle en $C_1$-$C_4$.
- les (Δ2-imidazolinyl) alkylsilane et les diorganopolysilanes porteurs de motifs (Δ2-imidazolinyl) alkylsiloxyle,
- les aminoalcoxysilanes contenant au moins un groupe amino lié au silicuim par au moins un atome de carbone, et au moins deux groupes alcoxy, ou polyalcoxy liés au silicium.

8. - Composition selon la revendication 7, caractérisée en ce que l'agent d'adhérence E est choisi parmi le silicate de méthyle, le tétra (méthoxyéthoxy)silane, le polysilicate de méthyle et les silanes de formules :

$$(C_2H_5O)_3Si(CH_2)_3NH_2$$

$$CH_3(C_2H_5O)_2Si(CH_2)_3NH_2$$

$$(CH_3O)_3Si(CH_2)_3NH(CH_2)_2NH_2$$

$$(C_2H_5O)_3Si(CH_2)_3NCH_2CH_2N = CH$$

9. - Composition selon l'une quelconque des revendications précédentes, caractérisée en ce qu'elle comporte en outre un catalyseur de durcissement.

10. - Composition selon l'une quelconque des revendications précédentes, caractérisée en ce qu'elle comporte en outre un plastifiant dont tout ou partie sont des alkylbenzènes et des polyalkylbenzènes de poids moléculaire supérieur à 200.

11. - Utilisation d'une composition telle que définie à l'une quelconque des revendications 1 à 9 pour la fabrication de joints en atmosphère confinée.

Office européen des brevets

# RAPPORT DE RECHERCHE EUROPEENNE

Numero de la demande

EP 88 42 0356

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 614 760 (G.R. HOMAN)<br>* Revendications 1,10; colonne 7, lignes 1-34 *<br>--- | 1 | C 08 L 83/04<br>C 08 J 3/24<br>C 08 K 5/00<br>C 08 K 3/00 |
| D,Y | EP-A-0 117 772 (RHONE-POULENC)<br>* Revendication 1; page 9 *<br>--- | 1 | |
| D,A | EP-A-0 118 325 (RHONE-POULENC)<br>* Revendication 1 *<br>--- | 1 | |
| A | FR-A-2 558 169 (DOW CORNING)<br>* Revendication 1 *<br>--- | 1 | |
| Y | FR-A-2 282 129 (XEROX CORP.)<br>* Revendications 1,4,5,6,7,11,12 *<br>----- | 1 | |
| | | | DOMAINES TECHNIQUES RECHERCHES (Int. Cl.4) |
| | | | C 08 L<br>C 08 K<br>C 08 J |

Le présent rapport a été établi pour toutes les revendications

| Lieu de la recherche | Date d'achèvement de la recherche | Examinateur |
|---|---|---|
| LA HAYE | 02-12-1988 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)